# EUROPEAN PATENT APPLICATION

(11) **EP 3 872 469 A1**
(43) Date of publication of application: **01.09.2021**
(21) Application number: 19875653.8
(22) Date of filing: 25.10.2019
(51) Int. Cl.: G01L 1/04, B60T 13/74, F16D 66/00, F16H 25/20, G01L 5/10

(54) **LOAD-APPLYING DEVICE**

(30) Priority: 26.10.2018 JP 2018201912
(71) Applicant: HI-LEX Corporation, Takarazuka-shi, Hyogo 665-0845 (JP)
(72) Inventor: KANDA, Masaki, Takarazuka-shi, Hyogo 665-0845 (JP)
(74) Representative: Pfiz, Thomas
(86) International application number: PCT/JP2019/041882
(87) International publication number: WO 2020/085483

(57) **Abstract**

A load applying device includes: a rotatable shaft member 21; a drive portion 3 for rotating the rotatable shaft member 21; a movable shaft member 221; a connecting member 4 to connect the movable shaft member 221 with an operation object O to which load is applied; a load sensor 5 having a housing 51, a spring member 52, and a sensor element 53; and a rotation suppressing portion S1 to suppress rotation of the movable shaft member 221, wherein the other end portion 221b of the movable shaft member 221 has a pressing portion P to press the housing 51, the movable shaft member 221 is configured to move in an axis X direction with driving of the drive portion 3 and press the housing 51 by the pressing portion P, the sensor element is configured to move with movement of the housing to detect load by the movable shaft member, thereby the load sensor and the drive portion side may be connected to each other in a simple configuration.

## Description

### TECHNICAL FIELD

The invention relates to a load applying device.

### BACKGROUND ART

A load applying device for applying load to an object such as a parking brake aims to apply a predetermined load to the object. Therefore, it is necessary to check, when the load is applied to the operation object, whether the load is appropriately applied. Although the load applied by the load applying device may be measured by control, a load sensor is used to check whether a desired load is actually applied (For example, Patent document 1).

### PRIOR ART DOCUMENT

### Patent Document

Patent Document 1: JP 2008-202957 A

### SUMMARY OF THE INVENTION

### PROBLEM TO BE SOLVED BY THE INVENTION

However, in a case that a load applying device is provided with a load sensor to check whether the load applying device applies a desired load, it is necessary to firmly connect the load sensor with the side of the drive portion applying the load. Therefore, the connection structure to connect the load sensor with the side of the drive portion becomes complex.

An object of the invention is to provide a load applying device to connect the load sensor with the drive portion side in a simple configuration.

### MEANS TO SOLVE THE PROBLEM

A load applying device according to the invention comprises: a rotatable shaft member having a rotatable shaft member screw portion provided coaxially with respect to a rotation axis of the rotatable shaft member; a drive portion for rotating the rotatable shaft member; a movable shaft member having a one end portion and an other end portion and a movable shaft member screw portion screwed to the rotatable shaft member screw portion; a connecting member to connect the one end portion side of the movable shaft member with an operation object to which load is applied; a load sensor having a housing, a spring member including a free end to be connected to the housing, and a sensor element; and a rotation suppressing portion to suppress rotation of the movable shaft member, wherein the other end portion of the movable shaft member has a pressing portion to press the housing of the load sensor, the movable shaft member is configured to move in an axis direction with driving of the drive portion to apply load to the connecting member and press the housing of the load sensor by the pressing portion, and the sensor element is configured to move with movement of the housing due to pressing of the movable shaft member to detect load by the movable shaft member.

### EFFECTS OF THE INVENTION

The load applying device according to the invention makes it possible to connect the load sensor with the drive portion side in a simple configuration.

### BRIEF DESCRIPTION OF THE DRAWINGS

FIG. 1 shows a top view of the inside of a load applying device according to one embodiment of the invention.
FIG. 2 shows a cross-sectional view along a line A-A in FIG. 1.
FIG. 3 shows the state in which the entire length of a shaft member is shortened from the state shown in FIG. 2 by rotating a rotatable shaft member.
FIG. 4 shows the state in which the rotatable shaft member further rotates from the state shown in FIG. 3 and a spring member of a load member is compressed to move a housing.

### EMBODIMENT FOR CARRYING OUT THE INVENTION

Below, with reference to the drawings, a load applying device according to one embodiment of the invention is described. The embodiment shown below is merely one example, so that the load applying device according to the invention is not limited to the embodiment below.

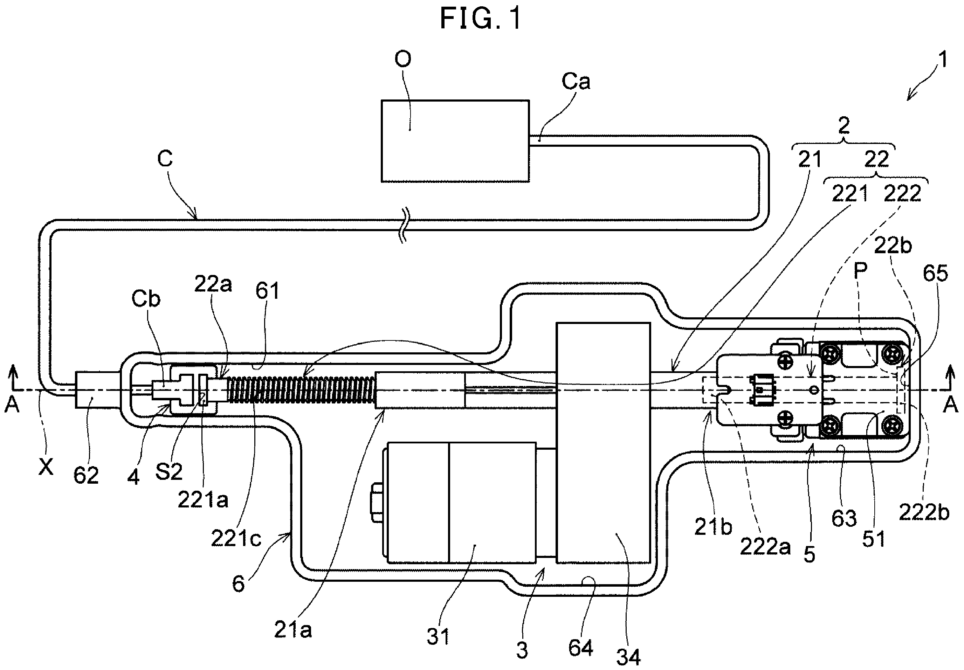

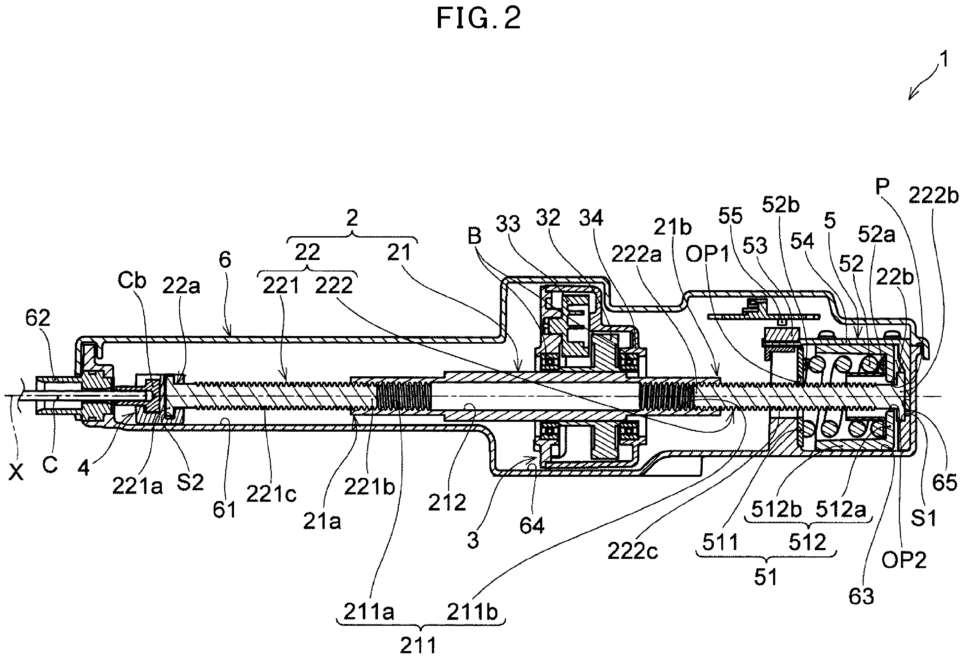

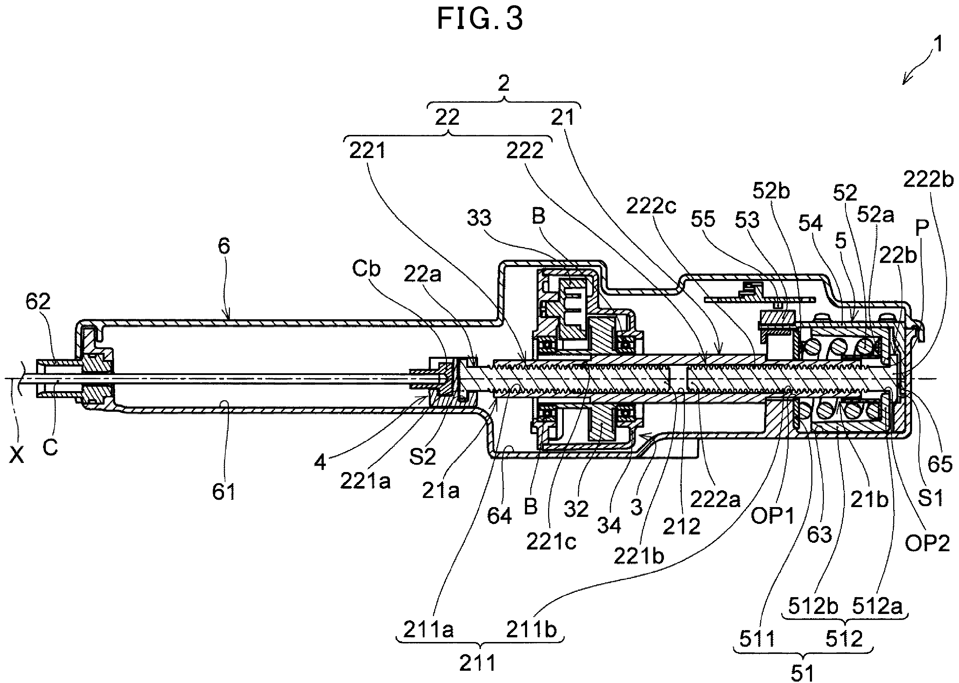

As shown in FIGS. 1 and 2, a load applying device 1 according to the embodiment comprises a rotatable shaft member 21, a movable shaft member 22, and a drive portion 3. In the embodiment, as shown in FIGS. 2 and 3, the movable shaft member 22 includes two movable shaft members, namely, a one side movable shaft member 221 and an other side movable shaft member 222. Herein, the one side movable shaft member 221 and the other side movable shaft member 222 are collectively referred to as the movable shaft member 22. It should be noted that the movable shaft member 22 may be composed of only one movable shaft member (for example, the other side movable shaft member 222). In the specification, the rotatable shaft member 21 and the movable shaft member 22 are collectively referred to as a shaft member 2.

The load applying device 1 has a connecting member 4 to connect a one end portion 22a side (in the embodiment, a one end portion 221a side of the one side movable shaft member 221) of the movable shaft member 22 with an operation object O to which load is applied. The load applying device 1 further has rotation suppressing portions S1, S2 (see FIG. 2) to suppress rotation of the movable shaft member 22. In the specification, an end portion, which is nearer to the operation object O, of the rotatable shaft member 21 is referred to as a one end portion. An end portion, which is farther from the operation object O (an end portion nearer to a load sensor 5 to be described below), of the rotatable shaft member 21 is referred to as an other end portion. Moreover, an end portion, which is nearer to the operation object O, of the movable shaft member 22 is referred to as a one end portion. An end portion, which is farther from the operation object O (an end portion nearer to a load sensor 5 to be described below), of the movable shaft member 22 is referred to as an other end portion. In a case that the movable shaft member 22 is composed of two movable shaft members as in the embodiment, an end portion nearer to the operation object O (an end portion nearer to the operation object O of the one side movable shaft member 221) in the entirety of the two movable shaft members is referred to as a one end portion of the movable shaft member 22 (or a one end portion of the shaft member 2). On the other hand, an end portion farther from the operation object O (an end portion farther from the operation object O of the other side movable shaft member 222) in the entirety of the two movable shaft members is referred to as an other end portion of the movable shaft member 22 (or an other end portion of the shaft member 2). In the drawings, the one end portion of the entirety of the movable shaft member 22 is indicated with the reference numeral 22a, while the other end portion of the entirety of the movable shaft member 22 is indicated with a reference numeral 22b. Moreover, the one end portion of the rotatable shaft member 21 is indicated with a reference numeral 21a, while the other end portion of the rotatable shaft member 21 is indicated with a reference numeral 21b. The one end portion of the one side movable shaft member 221 is indicated with the reference numeral 221a, while the other end portion of the one side movable shaft member 221 is indicated with a reference numeral 221b. Moreover, the one end portion of the other side movable shaft member 222 is indicated with a reference numeral 222a, while the other end portion of the other side movable shaft member 222 is indicated with a reference numeral 222b.

While the operation of the load applying device 1 is to be described below, the load applying device 1 is configured such that the entire length of the shaft member 2 in an axis X direction extends and contracts by driving of the drive portion 3. In the embodiment, as shown in FIGS. 2 to 4, the length of the movable shaft member 22 in the axis X direction from the one end portion 22a to the other end portion 22b extends and contracts by driving of the drive portion 3. The load applying device 1 is configured such that load is applied to the operation object O connected to the shaft member 2 via the connecting member 4, by the entire length of the shaft member 2 in the axis X direction extending and contracting. Moreover, in the embodiment, the load applying device 1 comprises the load sensor 5 as shown in FIGS. 1 and 2. As described below, the load applying device 1 is configured to detect load applied to the operation object O by the load sensor 5.

In the embodiment, the load applying device 1 is an electric parking brake drive device. Specifically, as shown in FIG. 1, the load applying device 1 is connected, via a transmitting member such as a cable C, to a brake mechanism such as a brake shoe being the operation object O. A one end Ca of the cable C is connected to the operation object O, while an other end Cb of the cable C is connected to the connecting member 4. For the cable C, a known control cable may be used. The load applying device 1 is configured such that a brake mechanism (the operation object O) operates when the cable C is pulled by the load applying device 1, and the operation of the brake mechanism is released when the cable C is released from the load applying device 1. With respect to the brake mechanism, a known structure such as a drum brake, for example, may be used, so that detailed explanations will be omitted. The load applying device 1 is not limited to the electric parking brake drive device as long as the load applying device 1 is configured to drive the shaft member 2 by the drive portion 3 to apply load to the operation object O. Moreover, the operation object O is not limited to the brake mechanism as long as load is applied to the operation object O by the load applying device 1. Furthermore, in the embodiment, the transmitting member to connect between the connecting member 4 and the operation object O is the cable C. However, the transmitting member is not limited to the cable C as long as load may be applied, by movement of the connecting member 4, to the operation object O. Therefore, the transmitting member may be a rod or a gear.

In the embodiment, as shown in FIGS. 1 and 2, the load applying device 1 has a casing 6 to house the rotatable shaft member 21, the movable shaft member 22, the drive portion 3, the connecting member 4, and the load sensor 5. The casing 6 houses the shaft member 2 in the state in which the shaft member 2 can extend and contract in the axis X direction. Moreover, the casing 6 has a guiding portion 61 to guide the connecting member 4 such that the connecting member 4 can slide in the axis X direction in accordance with extension/contraction of the shaft member 2 in the axis X direction. The guiding portion 61 has a width corresponding to the width of the connecting member 4 in a direction being perpendicular to the axis X direction as shown in FIG. 1 in order to stably move the connecting member 4 in the axis X direction. The casing 6 has, at a side of the one end portion 22a of the movable shaft member 22, a leading-out portion 62 to lead out, toward the operation object O, the cable C connected to the connecting member 4. The casing 6 has a sensor housing portion 63 to house the load sensor 5 at a side of the other end portion 22b of the movable shaft member 22. Moreover, the casing 6 has, at the lateral side of the rotatable shaft member 21, a drive portion housing portion 64 (see FIGS. 1 and 2) to house the drive portion 3.

The drive portion 3 rotates the rotatable shaft member 21 to apply load to the operation object O, or to release the load applied to the operation object O. In the embodiment, as shown in FIGS. 2 to 4, the movable shaft member 22 relatively moves in the axis X direction with respect to the rotatable shaft member 21 as shown in FIGS. 2 to 4 by the rotatable shaft member 21 being rotated by the drive portion 3. The connecting member 4 moves in the axis X direction by the movable shaft member 22 relatively moving in the axis X direction with respect to the rotatable shaft member 21. By this movement of the connecting member 4 in the axis X direction, the cable C is pulled (or pushed) to apply load to the operation object O.

In the embodiment, the drive portion 3 has a motor 31 (see FIG. 1) and a fitting member 32 (see FIGS. 2 to 4) to rotate by the driving force of the motor 31 and fit to the rotatable shaft member 21 to rotate the rotatable shaft member 21 around the axis X. The motor 31 is configured to be capable of rotating normal and reverse directions and can rotate the rotatable shaft member 21 around the axis X in one direction and in the other direction. The motor 31 is connected to the fitting member 32 via a deceleration mechanism 33 such as a relay gear provided between the motor 31 and the fitting member 32, and rotates the fitting member 32. In the embodiment, the fitting member 32 rotates the rotatable shaft member 21 around the axis X and is fitted to the rotatable shaft member 21 so that the rotatable shaft member 21 is movable in the axis X direction. Specifically, as shown in FIGS. 2 to 4, the fitting member 32 is arranged coaxially with the rotatable shaft member 21 and is spline-fitted to the outer periphery of the rotatable shaft member 21. The structure of the fitting member 32 is not particularly limited. The fitting member 32 is, for example, a gear being rotatably supported to a drive portion casing 34 of the drive portion 3 via a bearing B.

The connecting member 4 connects the one end portion 22a side of the movable shaft member 22 and the operation object O to which load is applied. In other words, the connecting member 4 is provided between the one end portion 22a of the movable shaft member 22 and the operation object O, and the movable shaft member 22 and the operation object O are indirectly connected via the connecting member 4. In the embodiment, the connecting member 4 is directly connected to the one end portion 221a of the one side movable shaft member 221. However, the connecting member 4 may be indirectly connected to the movable shaft member 22. Moreover, in the embodiment, the connecting member 4 is connected, via the cable C, to the operation object O. The connecting member 4 may be directly connected to the operation object O.

As described above, the connecting member 4 moves in the axis X direction by movement of the movable shaft member 22 in the axis X direction. By the connecting member 4 moving in the axis X direction, load is applied to the operation object O. In the embodiment, the connecting member 4 is guided to the guiding portion 61 of the casing 6 and slides in the axis X direction in conjunction with movement of the one side movable shaft member 221 in the axis X direction, and load is applied, via the cable C, to the operation object O.

In the embodiment, the connecting member 4 is formed separately from the shaft member 2 (the one side movable shaft member 221) and the cable C. However, a portion to function as a connecting member may be integrally provided to a one end portion of the shaft member 2 (the one end portion 22a of the movable shaft member 22) or an other end Cb of the cable C. In the embodiment, the load applying device 1 has two shaft members being the one side movable shaft member 221 and the other side movable shaft member 222, and the one end portion 221a of the one side movable shaft member 221 is connected to the connecting member 4. However, the shaft member 2 may be composed of single rotatable shaft member 21 and single movable shaft member 222, for example. In this case, the one end portion 21a of the rotatable shaft member 21 may be rotatably connected to the connecting member 4.

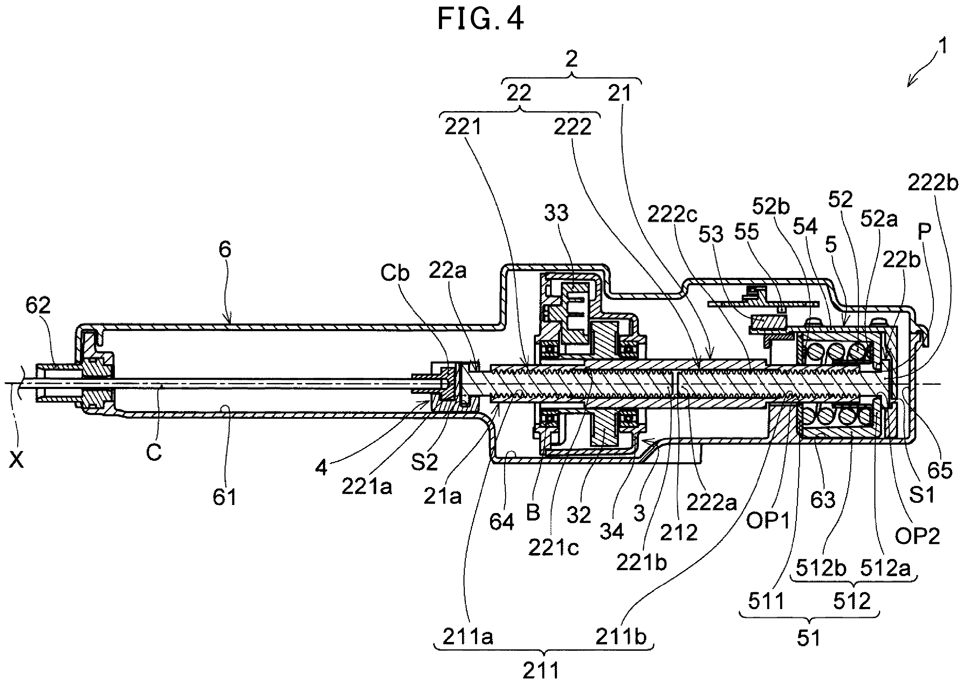

The shaft member 2 has the rotatable shaft member 21 and the movable shaft member 22. By the rotation of the rotatable shaft member 21, the movable shaft member 22 relatively moves in the axis X direction with respect to the rotatable shaft member 21 to apply load to the operation object O. In the embodiment, the movable shaft member 22 has the one side movable shaft member 221 provided on one side in the axis X direction and the other side movable shaft member 222 provided on the other side in the axis X direction. The one side movable shaft member 221 is provided on one side (the connecting member 4 side) in the axis X direction with respect to the rotatable shaft member 21 and is screwed to the one end portion 21a side of the rotatable shaft member 21. The other side movable shaft member 222 is provided on the other side (the load sensor 5 side) in the axis X direction with respect to the rotatable shaft member 21 and is screwed to the other end portion 21b side of the rotatable shaft member 21. While details will be described below, in the embodiment, when the rotatable shaft member 21 rotates, the one side movable shaft member 221 and the other side movable shaft member 222 relatively move in the axis X direction with respect to the rotatable shaft member 21, so that the entire length of the shaft member 2 (in the embodiment, the entire length from the one end portion 22a to the other end portion 22b of the movable shaft member 22) changes to extend and contract the shaft member 2. In this way, the connecting member 4 moves in the axis X direction, and load is applied, via the cable C, to the operation object O when the connecting member 4 moves in the axis X direction, or, in other words, moves to the other side (to the right in FIG. 2) in the axis X direction. On the contrary, when the connecting member 4 moves to the one side (to the left in FIG. 4) in the axis X direction, load to the operation object O is released.

The rotatable shaft member 21 rotates around the axis X by the drive portion 3. The rotatable shaft member 21 is screwed to the movable shaft member 22 to relatively move the moving shaft 22 in the axis X direction with respect to the rotatable shaft member 21 when the rotatable shaft member 21 rotates around the axis X. In the embodiment, the one side movable shaft member 221 is connected to the connecting member 4, and, by moving to the other side in the axis X direction in conjunction with rotation of the rotatable shaft member 21 around the axis X, load is applied to the operation object O. On the other hand, the other side movable shaft member 222 is connected to the load sensor 5, and load applied to the operation object O is detected when the other side movable shaft member 222 moves to the one side in the axis X direction as described below. As described above, the shaft member 2 may be composed of the rotatable shaft member 21 and the other side movable shaft member 222 and does not necessarily have to include the one side movable shaft member 221.

As shown in FIGS. 2 to 4, the rotatable shaft member 21 has a rotatable shaft member screw portion 211 provided coaxially with respect to the rotation axis (axis X). Moreover, the movable shaft member 22 has movable shaft member screw portions 221c, 222c screwed to the rotatable shaft member screw portion 211. The movable shaft member 22 is configured to relatively move in the axis X direction with respect to the rotatable shaft member 21 by screwing the rotatable shaft member screw portion 211 and the movable shaft member screw portions 221c, 222c.

In the embodiment, the rotatable shaft member screw portion 211 is a female screw provided on the inner periphery of the rotatable shaft member 21 being formed as a hollow cylindrical body. In the embodiment, the movable shaft member screw portions 221c, 222c are male screws provided on the outer periphery of the movable shaft member 22 to be inserted inside the rotatable shaft member 21. However, as long as the movable shaft member 22 may relatively move in the axis X direction with respect to the rotatable shaft member 21 by rotation of the rotatable shaft member 21, the rotatable shaft member screw portion 211 may be a male screw, while the movable shaft member screw portions 221c, 222c may be female screws.

In the embodiment, the rotatable shaft member screw portion 211 of the rotatable shaft member 21 has a one side rotatable screw portion 211a to be screwed to the one side movable shaft member 221, and an other side rotatable screw portion 211b to be screwed to the other side movable shaft member 222. The one side rotatable screw portion 211a of the rotatable shaft member 21 is screwed to the movable shaft member screw portion 221c of the one side movable shaft member 221. The other side rotatable screw portion 211b of the rotatable shaft member 21 is screwed to the movable shaft member screw portion 222c of the other side movable shaft member 222. In the embodiment, the one side rotatable screw portion 211a and the other side rotatable screw portion 211b are threaded in the reverse direction with respect to each other. In this way, when the rotatable shaft member 21 rotates in one direction, the one side movable shaft member 221 and the other side movable shaft member 222 relatively move so that they approach each other in the axis X direction. Moreover, when the rotatable shaft member 21 rotates in the other direction, the one side movable shaft member 221 and the other side movable shaft member 222 relatively moves away from each other in the axis X direction.

In the embodiment, in between the one side rotatable screw portion 211a on the one end portion 21a side of the rotatable shaft member 21 and the other side rotatable screw portion 211b on the other end portion 21b side in the axis X direction of the rotatable shaft member 21, the rotatable shaft member screw portion 211 has an unthreaded portion 212 in which no screw is formed. In this case, resistance at the time of screwing in the unthreaded portion 212 is reduced when the rotatable shaft member 21 and the movable shaft member 22 are screwed to each other, making relative movement between the rotatable shaft member 21 and the movable shaft member 22 smooth. The rotatable shaft member screw portion 211 may be formed over the entirety of the rotatable shaft member 21 in the axis X direction.

Rotation of the movable shaft member 22 around the axis X is suppressed by the rotation suppressing portions S1, S2. The rotation suppressing portions S1, S2 suppress the movable shaft member 22 co-rotating with the rotatable shaft member 21 at the time of rotation of the rotatable shaft member 21 around the axis X by suppressing rotation of the movable shaft member 22 around the axis X. In this way, the movable shaft member 22 can relatively move in the axis X direction with respect to the rotatable shaft member 21 when the rotatable shaft member 21 rotates around the axis X by screwing between the rotatable shaft member 21 and the movable shaft member 22. The structure or position of the rotation suppressing portions S1, S2 is not particularly limited as long as the rotation suppressing portions S1, S2 can suppress rotation of the movable shaft member 22 around the axis X. In the embodiment, the rotation suppressing portion S1 is configured to engage with the other end portion 222b of the other side movable shaft member 222 around the axis X. In the embodiment, the rotation suppressing portion S1 is provided in the load sensor 5 to be described below and is formed as a housing recess to engage, in the direction around the axis X, with the other end portion 222b of the other side movable shaft member 222 being formed in a polygon shape as in a head portion of a bolt, for example. Moreover, the rotation suppressing portion S2 is configured to engage with the one end portion 221a of the one side movable shaft member 221 in the direction around the axis X. In the embodiment, the rotation suppressing portion S2 is provided in the connecting member 4 and is formed as a housing recess to engage, in the direction around axis X, with the one end portion 221a of the one side movable shaft member 221 being formed in a polygon shape, for example.

In the embodiment, the rotatable shaft member 21 is configured to rotate around the axis X, and move in the axis X direction with respect to the drive portion 3. Specifically, the fitting member 32 and the outer periphery of the rotatable shaft member 21 are spline-fitted, for example, as described above so that the rotatable shaft member 21 may be rotated around the axis X by the drive portion 3 and may move in the axis X direction. In this way, the rotatable shaft member 21 moves in the axis X direction with respect to the drive portion 3 or the casing 6.

The load sensor 5 detects load applied to the operation object O. Specifically, the load sensor 5 detects that load being greater than or equal to a predetermined amount is applied to the operation object O. The load sensor 5 has a housing 51, a spring member 52 including a free end 52a to be connected to the housing 51, and a sensor element 53. While details will be described below, the other end portion 22b of the movable shaft member 22 has a pressing portion P to press the housing 51 of the load sensor 5, the movable shaft member 22 is configured to move in the axis X direction with driving of the drive portion 3 to apply load to the connecting member 4 and press the housing 51 of the load sensor 5 by the pressing portion P. The sensor element 53 is configured to move with movement of the housing 51 due to pressing of the movable shaft member 22 to detect load by the movable shaft member 22.

The sensor element 53 is configured to detect load applied to the operation object O according to the position of the sensor element 53 in the axis X direction being changed. The sensor element 53 is not particularly limited as long as the sensor element 53 may detect load according to the position of the sensor element 53 in the axis X direction being changed. In the embodiment, the sensor element 53 is a constituting element of a magnetic sensor to detect a change in the magnetic field due to a change in the position relationship between a magnet and a Hall IC. Specifically, in the embodiment, the sensor element 53 is a magnet being fixed, via a mounting member 54, to the housing 51. A Hall IC (a second sensor element) 55 being arranged to not relatively move with respect to the sensor element 53 is provided at the position opposing the sensor element 53. Alternatively, the sensor element 53 may be the Hall IC and the magnet may be provided at the position opposing the sensor element 53. The magnet 53 being one portion of the sensor element is preferably guided to move, in a predetermined position relationship, with respect to the Hall IC 55 being another portion of the sensor element. The magnet 53 may be guided in the state of being supported by a supporting portion to slide with the mounting member 54 such that the mounting member 54 does not oscillate when a movable portion 512 moves. The supporting portion may be provided to not relatively move with the casing 6, and is provided in a wall portion between the sensor housing portion 63 and a drive portion housing portion 64 in the embodiment. This supporting portion can suppress sliding of the mounting member 54 by having a groove to slide with the mounting member 54, for example. When the end edge of the mounting member 54 in the width direction slides inside the groove, the mounting member 54 is supported by the supporting portion, so that oscillation in the upward/downward direction shown in drawings is suppressed.

The housing 51 houses the spring member 52 inside the housing 51. Inside the housing 51, the spring member 52 is arranged such that a biasing force is applied in the axis X direction. The spring member 52 is not particularly limited as long as the spring member 52 applies the biasing force in the axis X direction. In the embodiment, the spring member 52 is a coil spring, and is arranged such that the axis center of the spring member 52 is coaxial with the axis center of the movable shaft member 22.

In the embodiment, the housing 51 has a portion to move in conjunction with extension and contraction of the spring member 52 housed inside the housing 51. Specifically, in the embodiment, the housing 51 has a base portion 511 provided on one side of the housing 51 in the axis X direction (on one end portion 222a side of the other side movable shaft member 222) and a movable portion 512 provided on the other side of the housing 51 in the axis X direction and moved with respect to the base portion 511.

In the embodiment, the base portion 511 is formed in a shape of a plate extending perpendicularly to the axis X. The movable portion 512 comprises a wall portion 512a extending in the perpendicular direction with respect to the axis X and a covering portion 512b to cover the outer periphery of the spring member 52 externally in the diameter direction, the covering portion 512b extending toward the base portion 511 in the axis X direction from the wall portion 512a. However, the overall shape of the housing 51 or the shape of the base portion 511 and the movable portion 512 is not particularly limited.

In the embodiment, the base portion 511 is fixed to the casing 6 and an end portion on one side 52b of the spring member 52 is fixed to the base portion 511. The movable portion 512 is movable in the axis X direction with respect to the base portion 511. A free end 52a, which is an end portion on the other side of the spring member 52 and changes the position in the axis X direction, is attached to the wall portion 512a of the movable portion 512. In the embodiment, the spring member 52 positions the sensor element 53 at an initial position by biasing the movable portion 512 of the housing 51 to the other side in the axis X direction. More specifically, as shown in FIG. 2, the casing 6 has a positioning portion 65 provided to stop, at the initial position, the movable portion 512 being biased to the other side in the axis X direction by the spring member 52. The positioning portion 65 is configured to stop the movable portion 512 at a predetermined initial position at which the magnetic flux density of a magnet (the sensor element 53) detected by the Hall IC 55 takes a predetermined reference value (for example, zero). In the embodiment, the positioning portion 65 is an inner wall of the casing 6 to abut, in the axis X direction, the mounting member 54 attached to the movable portion 512 of the housing 51. However, the positioning portion is not limited to the inner wall of the casing 6 as long as the positioning portion can stop the movable portion 512 at the predetermined initial position. In the embodiment, when the movable portion 512 is at the initial position, a predetermined space is formed between the movable portion 512 (an end portion on one side of the covering portion 512b in the axis X direction) and the base portion 511 such that the movable portion 512 can move to the one side in the axis X direction. In this way, the movable portion 512 can move to the one side in the axis X direction against the biasing force of the spring member 52.

In the embodiment, as shown in FIGS. 2 to 4, the housing 51 of the load sensor 5 has, on the one side in the axis X direction of the movable shaft member 22 and on the other side in the axis X direction of the movable shaft member 22, opening portions OP1, OP2, respectively, through which the movable shaft member 22 passes. The movable shaft member 22 extends from the opening portion OP1 on the one side to the opening portion OP2 on the other side to pass through the housing 51, and the pressing portion P connects to the housing 51 on the other side. In the embodiment, the opening portion OP1 on the one side is formed in the base portion 511, while the opening portion OP2 on the other side is formed in the movable portion 512. In the embodiment, the other side movable shaft member 222 extends passing through the housing 51. The movable shaft member 222 extends through the space inside the spring member 52 from the opening portion OP1 on the one side to the opening portion OP2 on the other side.

When load is applied to the connecting portion 4 by the movable shaft member 22 moving in the axis X direction with driving of the drive portion 3, the pressing portion P presses the housing 51 of the load sensor 5 and moves the housing 51 to the one side in the axis X direction. In the embodiment, when the pressing portion P presses the housing 51, the movable shaft member 22 (the other side movable shaft member 222) moves to the one side in the axis X direction. Moreover, in the embodiment, load to the connecting portion 4 is indirectly applied via the rotatable shaft member 21 and the one side movable shaft member 221 from the other side movable shaft member 222, and load applied to the connecting member 4 is applied to the operation object O. For example, there can be a case that load applied to the connecting member 4 and the operation object O exceeds a predetermined load, such as when the operation object O, such as a brake mechanism, is operated to a degree sufficient to apply a predetermined braking force, for example. In such a case, the movable shaft member 22 (the other side movable shaft member 222) is configured to move in the axis X direction against the biasing force of the spring member 52 by the pressing portion P pressing the housing 51.

In the embodiment, the other end portion 22b of the movable shaft member 22 has a flange portion protruding externally in the diameter direction with respect to a shaft portion having the movable shaft member screw portion 222c of the movable shaft member 22. The pressing portion P is a surface, which faces the wall portion 512a of the movable portion 512, of the flange portion. However, the structure of the pressing portion P is not particularly limited as long as the pressing portion P can press the housing 51 of the load sensor 5 in the axis X direction.

As described above, the movable shaft member 22 moves in the axis X direction and applies load to the connecting member 4, and the pressing portion P presses the housing 51 of the load sensor 5. Moreover, in such a case, the housing 51 moves in the axis X direction to move the sensor element 53 with pressing of the housing 51 by the pressing portion P, and load by the movable shaft member 22 is detected. In this way, in the embodiment, it suffices that the movable shaft member 22 is connected to the housing 51 of the load sensor 5 such that the pressing portion P can press the housing 51. Therefore, a complicated mounting structure between the movable shaft member 22 and the housing 51 or between the housing 51 and the sensor element 53 is not necessary. Therefore, it is possible to make a connection between the load sensor 5 and the movable shaft member 22 a simple configuration.

In the embodiment, the movable shaft member 22 extends from the opening portion on the one side OP1 to the opening portion on the other side OP2 to pass through the housing 51, and the pressing portion P is connected to the housing on the other side. In this way, the movable shaft member 22 and the hosing 51 are arranged so that they overlap in the axis X direction. Therefore, it is possible to decrease the length of the load applying device 1 in the axis X direction. The load sensor 5 is configured that the housing 51 moves toward the one side against the biasing force of the spring member 52 with the pressing portion P pressing the housing 51 by movement of the movable shaft member 22 (the other side movable shaft member 222 in the embodiment) toward the one side. Moreover, the housing 51 moves toward the other side with pressing of the pressing portion P being released by movement of the movable shaft member 22 (the other side movable shaft member 222 in the embodiment) toward the other side. In this way, when pressing by the pressing portion P is released, the housing 51 can return to the original position by the biasing force of the spring member 52. In the embodiment, the pressing portion P is configured to engage with the external surface (a surface on the other side in the axis X direction) of the wall portion 512a of the movable portion 512 such that the pressing portion P presses the movable portion 512 of the housing 51 to the one side in the axis X direction. In this way, the movable shaft member 22 moving in the axis X direction presses the housing 51 directly by the pressing portion P, the housing 51 itself moves in the axis X direction, and the sensor element 53 also moves in the axis X direction in conjunction therewith.

Next, using example in which the load applying device 1 is applied to the parking brake device with reference to FIGS. 2 to 4, the operation of the load applying device 1 in the embodiment will be described.

In FIG. 2, load is not applied to a brake mechanism (below called a brake mechanism O) being an operation object of a parking brake device (below called a parking brake device 1), so that the brake mechanism O is in the non-operating state. When the parking brake device 1 is operated from this state, an operating portion not shown is operated to drive the drive portion 3. When the drive portion 3 is driven, the motor 31 rotates to rotate the fitting member 32 around the axis X via the deceleration mechanism 33. When the fitting member 32 rotates around the axis X, the rotatable shaft member 21 to engage with the fitting member 32 in the direction around the axis X rotates around the axis X. When the rotatable shaft member 21 rotates, the other side movable shaft member 222 almost does not rotate around the axis X since rotation of the other side movable shaft member 222 around the axis X is suppressed by the rotation suppressing portion S1. Then, the other side rotatable screw portion 211b of the rotatable shaft member 21 is screwed to the movable shaft member screw portion 222c of the other side movable shaft member 222, and the rotatable shaft member 21 moves to the other side (to the right in FIG. 2) in the axis X direction with respect to the other side movable shaft member 222. The other end portion 222b of the other side movable shaft member 222 is attached to the movable portion 512 of the housing 51, and the movable portion 512 of the housing 51 is biased to the other side (to the right) in the axis X direction with a predetermined biasing force by the spring member 52. Therefore, the other end portion 222b of the other side movable shaft member 222 almost does not move in the axis X direction until a predetermined load is applied to the other side movable shaft member 222. The rotatable shaft member 21 is movably engaged with respect to the fitting member 32 in the axis X direction, and the rotatable shaft member 21 moves to the other side (to the right) in the axis X direction with respect to the other end movable shaft member 222 in the casing 6 while rotating around the axis X from the state shown in FIG. 2 to the state shown in FIG. 3.

Since rotation of the one side movable shaft member 221 around the axis X is suppressed by the rotation suppressing portion S2 provided in the connecting member 4, the one side movable shaft member 221 almost does not rotate around the axis X. Then, the one side rotatable screw portion 211 of the rotatable shaft member 21 is screwed to the movable shaft member screw portion 221c of the one side movable shaft member 221. The one side movable shaft member 221 moves to the other side in the axis X direction with respect to the rotatable shaft member 21 until a predetermined load is applied to the brake mechanism O connected to the connecting member 4 via the cable C.

As mentioned above, when the drive portion 3 is continuously driven from the state in FIG. 2, the rotatable shaft member 21 moves toward the other side (to the right in FIG. 2) in the axis X direction in the casing 6, and, in the inner space of the rotatable shaft member 21, the other end portion 221b of the one side movable shaft member 221 and the one end portion 222a of the other side movable shaft member 222 relatively move with respect to the rotatable shaft member 21 so as to approach each other (see FIG. 3). In this case, when the rotatable shaft member 21 rotates at a predetermined number of rotations, the entire length of the movable shaft member 22 from the one end portion 22a to the other end portion 22b (from the one end portion 221a of the one side movable shaft member 221 to the other end portion 222b of the other side movable shaft member 222) decreases by an amount corresponding to the total of the movement amount in which the one side movable shaft member 221 relatively moves to the other side in the axis X direction and the movement amount in which the other side movable shaft member 222 relatively moves to the one side in the axis X direction. Therefore, in a case that the shaft member 2 is composed of the rotatable shaft member 21, the one side movable shaft member 221, and the other side movable shaft member 222, the movement amount of the connecting member 4 in a case that the rotatable shaft member 21 rotates at the predetermined number of rotations is greater in comparison to a case in which single movable shaft member and single rotatable shaft member is provided. Thus, in the parking brake device 1 in the embodiment, the operating amount of the cable C in a case that the rotatable shaft member 21 rotates at a predetermined number of rotations is relatively increased, making it possible to improve the operation efficiency.

In the embodiment, the opening portion OP1 of the housing 51 of the load sensor 5 has a size such that the rotatable shaft member 21 is insertable into the opening portion OP1 when the rotatable shaft member 21 moves in a direction in which the rotatable shaft member 21 approaches to the pressing portion P of the movable shaft member 22. In this case, when the rotatable shaft member 21 moves toward the other side in the axis X direction, the other end portion 21b of the rotatable shaft member 21 can be inserted inside of the housing 51 from the opening portion OP1 of the housing 51 of the load sensor 5 as shown in FIGS. 3 and 4. Therefore, the space inside the housing 51 of the load sensor 5 can be utilized as a movement space of the rotatable shaft member 21 (In other words, in a case that the rotatable shaft member 21 cannot get into the housing 51, the length in the axis X direction of the housing 51 of the load sensor 5, in addition to the length in the axis X direction of the rotatable shaft member 21, is required, increasing the length in the axis X direction of the casing 6). Therefore, the total length of the shaft member 2 and the load sensor 5 in the axis X direction required to move the connecting member 4 and the cable C with a predetermined stroke can be shortened. In this way, the length in the axis X direction of the casing 6 of the parking brake device 1 can be shortened, making it possible to downsize the entire device.

When the rotatable shaft member 21, the one side movable shaft member 221, and the other side movable shaft member 222 move from the state shown in FIG. 2 to the state shown in FIG. 3, the connecting member 4 and the cable C move with a predetermined stroke and the brake mechanism O being an operation object is operated. When the brake mechanism O is operated with a predetermined amount to be brought into the state in which brake is applied thereto, the connecting member 4 and cable C do not move further (the state shown in FIG. 3). When the drive portion 3 is further driven in this state, load being greater than necessary load is applied to the brake mechanism O or the connecting member 4. In a case that such load is applied, the load sensor 5 is configured to detect the load.

Specifically, while the rotatable shaft member 21 tries to rotate further by driving of the driving portion 3 in the state in which brake is applied in the state in FIG. 3, the movement of the one side movable shaft member 221 in the axis X direction is regulated by the connecting member 4. Thus, the one side movable shaft member 221 almost does not move in the axis X direction, while the rotatable shaft member 21 moves to the one side in the axis X direction. Moreover, the rotatable shaft member 21 rotates around the axis X, so that the other side movable shaft member 222 being screwed to the rotatable shaft member 21 and having rotation around the axis X suppressed relatively moves to the one side in the axis X direction with respect to the rotatable shaft member 21 against the biasing force of the spring member 52. Therefore, the rotatable shaft member 21 moves to the one side in the axis X direction with respect to the casing 6 against the biasing force of the spring member 52 being provided in the load sensor 5, and the other side movable shaft member 222 moves to the one side in the axis X direction with respect to the rotatable shaft member 21. In this way, the pressing portion P provided in the other end portion 222b of the movable shaft member 222 presses the wall portion 512a of the movable portion 512 of the housing 51 toward the one side in the axis X direction. When the movable portion 512 of the housing 51 is pressed by the pressing portion P, the movable portion 512 moves to the one side in the axis X direction toward the base portion 511 while the spring member 52 is compressed. When the movable portion 512 of the housing 51 moves to the one side in the axis X direction, the sensor element 53 also moves to the one side in the axis X direction. When the sensor element 53 moves in the axis X direction from the initial position shown in FIG. 2, the relative position with respect to the opposing Hall IC 55 changes and the changing magnetic field around the Hall IC 55 changes. In this way, through a change in the output voltage from the Hall IC 55, whether load being greater than or equal to a predetermined amount is applied to the brake mechanism O may be detected by the load sensor 5. When the load being greater than or equal to the predetermined amount being applied is detected by the load sensor 5, the drive portion 3 is stopped, maintaining the brake mechanism O to be in the operating state. In a case of releasing the operation of the brake mechanism O, by operating an operating portion not shown and driving the drive portion 3 to rotate the motor 31 in the reverse direction, the rotatable shaft member 21, the one side movable shaft member 221, and the other side movable shaft member 222 are operated from the state shown in FIG. 4 to the state shown in FIG. 2.

### DESCRIPTION OF REFERENCE NUMERALS

1 LOAD APPLYING DEVICE (PARKING BRAKE DEVICE)
2 SHAFT MEMBER
21 ROTATABLE SHAFT MEMBER
21a ONE END PORTION OF ROTATABLE SHAFT MEMBER
21b OTHER END PORTION OF ROTATABLE SHAFT MEMBER
211 ROTATABLE SHAFT MEMBER SCREW PORTION
211a ONE SIDE ROTATABLE SCREW PORTION
211b OTHER SIDE ROTATABLE SCREW PORTION
212 UNTHREADED PORTION
22 MOVABLE SHAFT MEMBER
221 ONE SIDE MOVABLE SHAFT MEMBER
221a ONE END PORTION OF ONE SIDE MOVABLE SHAFT MEMBER
221b OTHER END PORTION OF ONE SIDE MOVABLE SHAFT MEMBER
221c MOVABLE SHAFT MEMBER SCREW PORTION
222 OTHER SIDE MOVABLE SHAFT MEMBER
222a ONE END PORTION OF OTHER SIDE MOVABLE SHAFT MEMBER
222b OTHER END PORTION OF OTHER SIDE MOVABLE SHAFT MEMBER
222c MOVABLE SHAFT MEMBER SCREW PORTION
3 DRIVE PORTION
31 MOTOR
32 FITTING MEMBER
33 DECELERATION MECHANISM
34 DRIVE PORTION CASING
4 CONNECTING MEMBER
5 LOAD SENSOR
51 HOUSING
511 BASE PORTION
512 MOVABLE PORTION
512a WALL PORTION
512b COVERING PORTION
52 SPRING MEMBER
52a FREE END OF SPRING MEMBER
52b END PORTION ON ONE SIDE OF SPRING MEMBER
53 SENSOR ELEMENT
54 MOUNTING MEMBER
55 HALL IC (SECOND SENSOR ELEMENT)
6 CASING
61 GUIDING PORTION
62 LEADING-OUT PORTION
63 SENSOR HOUSING PORTION
64 DRIVE PORTION HOUSING PORTION
65 POSITIONING PORTION
B BEARING
C CABLE
Ca ONE END OF CABLE
Cb OTHER END OF CABLE
O OPERATION OBJECT (BRAKE MECHANISM)
OP1, OP2 OPENING PORTION
P PRESSING PORTION
S1, S2 ROTATION SUPPRESSING PORTION
X AXIS

## Claims

1. A load applying device comprising:
a rotatable shaft member having a rotatable shaft member screw portion provided coaxially with respect to a rotation axis of the rotatable shaft member;
a drive portion for rotating the rotatable shaft member;
a movable shaft member having a one end portion and an other end portion and a movable shaft member screw portion screwed to the rotatable shaft member screw portion;
a connecting member to connect the one end portion side of the movable shaft member with an operation object to which load is applied;
a load sensor having a housing, a spring member including a free end to be connected to the housing, and a sensor element; and
a rotation suppressing portion to suppress rotation of the movable shaft member, wherein
the other end portion of the movable shaft member has a pressing portion to press the housing of the load sensor,
the movable shaft member is configured to move in an axis direction with driving of the drive portion to apply load to the connecting member and press the housing of the load sensor by the pressing portion, and
the sensor element is configured to move with movement of the housing due to pressing of the movable shaft member to detect load by the movable shaft member.

2. The load applying device according to claim 1, wherein
the housing of the load sensor has, on one side and the other side in the axis direction of the movable shaft member, opening portions, respectively, through which the movable shaft member passes,
the movable shaft member extends from the opening portion on the one side to the opening portion on the other side to pass through the housing, and the pressing portion connects to the housing on the other side, and
the load sensor is configured that the housing moves toward the one side against the biasing force of the spring member with the pressing portion pressing the housing by movement of the movable shaft member toward the one side, and the housing moves toward the other side with pressing of the pressing portion being released by movement of the movable shaft member toward the other side.

3. The load applying device according to claim 2, wherein
the movable shaft member has a one side movable shaft member provided on the one side and an other side movable shaft member provided on the other side;
the rotatable shaft member screw portion of the rotatable shaft member has a one side rotatable screw portion to be screwed to the one side movable shaft member and an other side rotatable screw portion to be screwed to the other side movable shaft member, wherein
the opening portion of the housing of the load sensor has a size such that the rotatable shaft member is insertable into the opening portion when the rotatable shaft member moves in a direction in which the rotatable shaft member approaches to the pressing portion of the movable shaft member.
